# EUROPEAN PATENT SPECIFICATION

(11) **EP 0 626 092 B1**
(45) Date of publication and mention of the grant of the patent: **27.03.1996**
(21) Application number: 92904411.3
(22) Date of filing: 10.02.1992
(51) Int. Cl.: G11B 15/50, G11B 15/44, G11B 15/32

(54) **Device for exchanging tape-reel speed**
Vorrichtung zum Wechsel von Bandspulengeschwindigkeit
Dispositif pour modifier la vitesse d'une bobine de bande

(43) Date of publication of application: 30.11.1994
(73) Proprietor: FUNAI ELECTRIC COMPANY LIMITED, Daito-shi, Osaka 574 (JP)
(72) Inventor: SAWAI, Kunio, Daito-shi, Osaka 574 (JP)
(74) Representative: Durand, Yves Armand Louis
(86) International application number: JP9200128
(87) International publication number: WO9316470

(56) References cited:
- EP-A- 0 211 302
- BE-A- 859 810
- DE-A- 2 914 032
- DE-A- 3 916 081
- DE-C- 864 752
- US-A- 3 918 093
- US-A- 4 173 320
- US-A- 4 711 410

## Description

### THE BACKGROUND OF THE INVENTION

The present invention relates to a device for exchanging tape-reel speed adapted to a tape recorder such as a video tape recorder, a video tape player, Digital Audio Tape recorder and camera recorder for home or business use as well as a combination recorder with a television, and other visual or audio devices having a tape recorder or player.

The prior art recorder or player with a tape winding system had generally included means for controlling tape-speed in a prescribed constant line speed according to various amounts of a record tape wound to a tape reel and additionally included means for fast-forwarding and rewinding modes. For the purpose of such uses, a system driving the tape-reel had been provided with a torque flexible transmission device as mentioned hereinafter.

The torque flexible transmission device had included a friction member disposed between the power transmission route from a drive motor to a tape setting disc for winding the record tape to the reel set thereon, so that the friction member could be slided to a driven member attached to the tape setting disc or to a driving member attached to the side of the drive motor under the constant line speed of the tape for recording or replaying mode, and means for directly intermeshing the driven and driving members in each other under the fast-forwarding or rewinding mode by a suitable gear train so as to remove the sliding between the tape setting disc and drive motor.

Nevertheless, the intermeshing means had unavoidably included a complicated construction in order to connect or release the gear train with or from the driven and driving members, the means further including an exclusive motor or an electro-magnetic solenoid device.

### OBJECTS OF THE INVENTION

An object of this invention provides a device for exchanging tape-reel speed according to the operating mode selected in a tape recorder or player wherein the intermeshing means can be constituted in a simple construction and operated in a reliable condition.

A second object of this invention provides a device for exchanging tape-reel speed including means for guiding a gear to be directly intermeshed to both a driven member for rotating a tape setting disc and a driving member adapted to the side of a drive motor, through the driving and driven members being slidably intermeshed in each other through a friction member.

### SUMMARY OF THE INVENTION

According to the present invention, there is provided a device for exchanging tape-reel speed adapted to a tape recorder or player which includes a driving tape disc for setting a tape reel thereon, a driven tape disc for setting a tape feeding reel thereon, and means for alternately supplying a torque power from a drive motor to either one of the tape discs, the supplying means having two gears attached to the driven and driving tape discs, a shift gear alternately intermeshed to either one of the gears, a shift member for engaging the selecting gear with either one of the gears, and a torque power transmission gear generally intermeshing to the shift gear, characterized by comprising a gear adapted as a driven member coaxially connected to the torque power transmission gear, a gear adapted as a driving member coaxially rotated to the driven member, a friction member rotatably disposed between the driven and driving members, means for pressing the driving member through the friction member against the driven member, a direct-transmitting gear disengageably intermeshed to both of the driven and driving members, means with an electro-magnetic solenoid device for shifting the direct-transmitting gear so as to be carried access or far to a position for intermeshing to the driven and driving members, and means for releasing the direct-transmitting member from the intermeshing position as the electro-magnetic solenoid device is disenergized.

Further features and advantages of the present invention will be apparent from the following description taken with reference to the accompanying drawings.

### BRIEF DESCRIPTION OF THE DRAWINGS

FIG.1 is a vertical front side view of a device for exchanging tape-reel speed according to an embodiment of this invention;

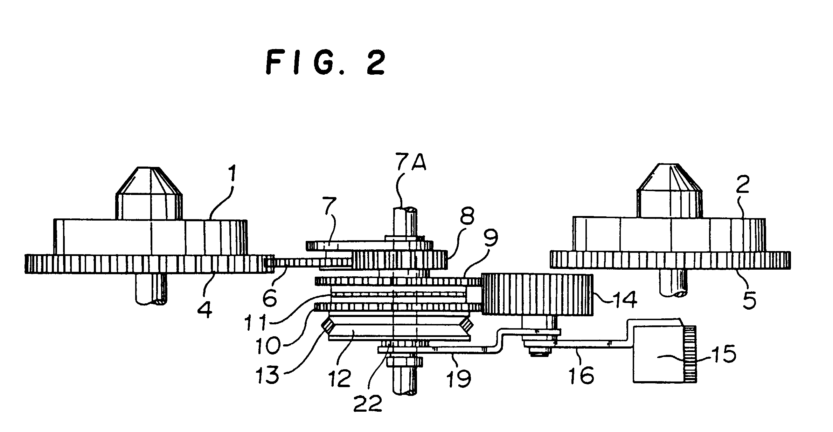

FIG.2 is a plan view of the exchanging device mentioned above; and
FIGS.3 and 4 are plan views of the exchanging device in parts for explanation of the system operation.

### DETAILED DESCRIPTION

A device of this invention is adapted for exchanging tape-reel speed according to one operating mode selected from recording, replaying, fast-forwarding and rewinding operations in a tape recorder or player as well as a combination thereof.

The exchanging device includes a driving tape disc 1 for setting a tape reel T1 thereon, a driven tape disc 2 for setting a tape feeding reel T2 thereon, and means (as mentioned hereinafter) for alternately supplying a torque power from a drive motor (not shown in the drawings) to either one of the tape discs 1 and 2, the supplying means having two gears 4 and 5 coaxially attached to the driven and driving tape discs 1 and 2, a counter gear 5A intermeshed to the latter gear 5, a shift gear 6 alternately intermeshed to either one of the gears 4 and 5A, a shift member 7 for engaging the shift gear 6 with either one of the gears 4 and 5A, and a torque power transmission gear 8 generally intermeshing to the shift gear 6.

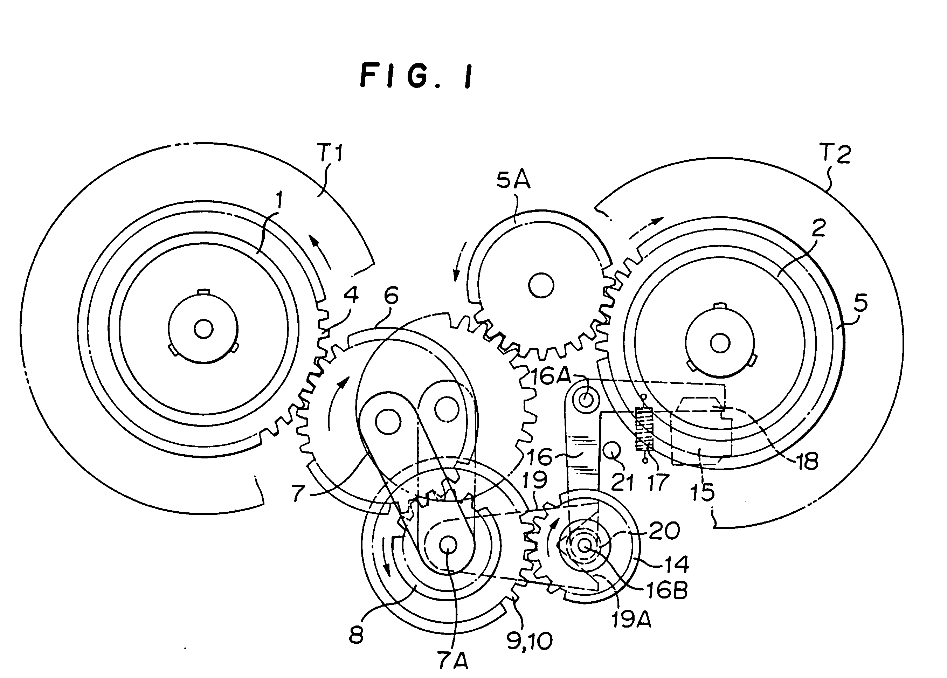

In this embodiment, the shift member 7 is rotatably supported to a vertical shaft 7A fixedly disposed to a base frame ( not shown in the drawings ) so as to be positioned coaxial to the axis of the torque transmission gear 8, thereby to cause the shift gear 6 to be alternately intermeshed to either one of the gears 4 and 5A as the shift member 7 is swung around the shaft 7A by driving means (not shown in the drawings) to be shifted toward the left and right sides as shown in Fig.1.

The exchanging device of this invention is particularly provided with a torque flexible transmission device comprising a driven gear 9 coaxially connected to the torque power transmission gear 8, a driving gear 10 coaxially rotatable to the driven gear 9, a friction member 11 rotatably disposed between the driven and driving gears 9 and 10, and means (not shown in the drawings) for pressing the driving gear 10 through the friction member 11 against the driven gear 9 for transmitting torque power applied from the drive motor to either one of the tape discs 1 and 2 via the gear train including the gears 4, 5, 5A, 6 and 8. In this embodiment, the torque flexible transmission device further includes a driven pulley 12 coaxially secured to the driving gear 10 and adapted to transmit the torque power from a driving pulley (not shown in the drawings) via an endless belt 13 with a V-shaped cross section, the driving pulley depending to the drive motor. In this embodiment, the power transmitting system under friction instead of the pressing means mentioned above, may be provided with an assembly in which the friction member 11 is previously biased between the driven and driving gears 9 and 10 so as to transmit a prescribed constant torque, thereby to maintain the constant line speed of the record tape.

Furthermore, the exchanging device includes a direct-transmitting gear 14 which is disengageably intermeshed to both of the driven and driving gears 9 and 10, and means (as detailed hereinafter) with an electro-magnetic solenoid device 15 for shifting the direct-transmitting gear 14 towards or away from a position for intermeshing to the driven and driving gears 9 and 10, and means (as detailed hereinafter) for releasing the direct-transmitting gear 14 from the intermeshing position as the electro-magnetic solenoid device 15 is disenergized.

In this embodiment, the shifting means applied to the direct-transmission includes an L-shaped lever 16 having a pivot shaft 16A vertically disposed to the chassis (the base frame) so that the lever 16 can be turned around its shaft 16A, and a coiled tension spring member 17 which is provided with its one end attached to the lever 16 and its other end attached to the chassis, the lever having its one end rotatably supporting the gear 14 by means of a pivot shaft 16B and its other end to which is attached a ferrite piece 18 capable of being magnetically attracted to an armature core 15A adapted to the solenoid device 15.

The releasing means mentioned above in this embodiment includes a guide member 19 coaxially and rotatably supported with the shaft of the driven pulley 12 and having its free end with a V-shaped guide 19A adapted to receive the gear 14 with a radial bearing member journal 20, and the releasing means further includes a friction member 22 put between the pulley 12 and guide member 19 with it being pressed in a thrust direction. In this embodiment, reference number 21 is a stopper pin disposed to the chassis to limit the motion of the swinging lever 16.

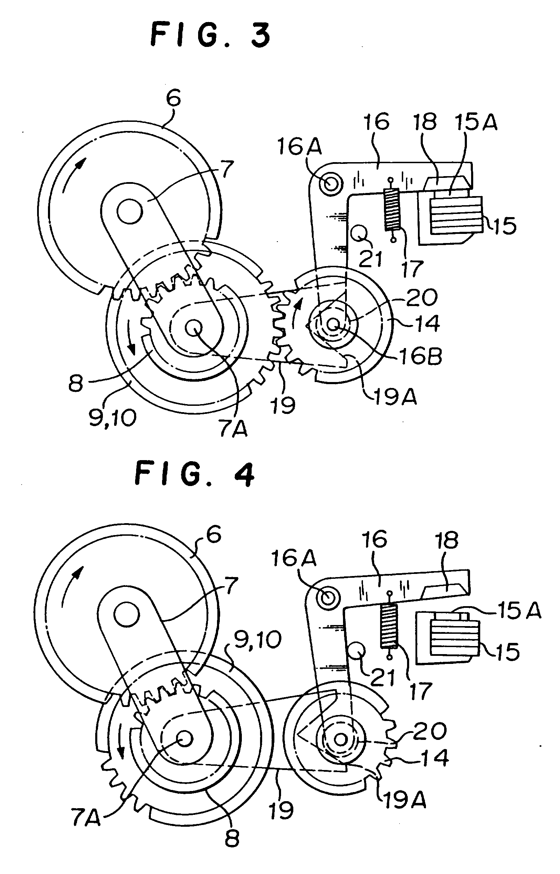

As shown in Fig. 3, when the disk 1 is driven per rapid mode, or the disk 2 is driven per rewind mode, the lever 16 rotates clockwise in the drawing, by means of excitation of the solenoid device 15 and spring bias of the tensioning spring 17, making the direct-transmitting gear 14 approach, along the V-shaped guide 19A, to the gears 9 and 10 for meshing therewith. Under this condition, the torque supplied from the drive motor via the belt pulley means is directly transmitted to the tape disc 1 ( or the tape disc 2 ) without the line speed control for a record tape being regulated by the pressing means through the friction member 11.

On the other hand, when the disk 1 is driven per operation mode, as shown in Fig. 4, the solenoid device 15 is degaussed, and the torque, applied to the guide 19 through the friction member 22, releases the gear 14, along the V-shaped guide 19A, from the gears 9 and 10, making the lever 16 return counterclockwise in the drawing. In this case, the torque power to the guide member 19 should be sufficiently maintained to over come the spring bias of the spring member 17, therefore, the friction member 22 is adjusted so that the torque, applied to the guide 19 through the friction member 22, is stronger than the resilient force of the tensioning spring 17, and at the same time, slightly weaker than the total of the resilient force of the tensioning spring 17 and the exciting force of the solenoid device 15.

## Claims

1. A device for exchanging tape-reel speed, to be applied to a tape recorder or a player, comprising:
(a) a driving tape disk (1) for setting a tape reel thereon,
(b) A driven tape disk (2) for setting a tape-feeding reel thereon, and
(c) means for alternately supplying torque force from a drive motor to either of the tape disks,
said supplying means having:
(d) two gears (4 and 5) attached to the driving and driven disks, respectively,
(e) a shift gear (6) which meshes alternately with either of the two gears,
(f) a shifting member (7) which makes the gear (6) mesh alternately with either of the two gears,
(g) a torque-transmitting gear (8) which meshes always with the shift gear (6)
characterised by comprising:
(h) a driven gear (9) connected coaxially with the torque-transmitting gear (8),
(i) a driving gear (10) which rotates coaxially with the driven member,
(j) a driven pulley (12) mounted on the driving member for transmitting torque force from the drive motor,
(k) a friction member (11) disposed between the driving member and the driven member,
(l) a means to urge the driven member to the driving member via the friction member,
(m) a direct-transmitting gear (14) which meshes with the driving member and the driven member disengageably,
(n) a guide member (19), one end thereof having a V-shaped guide (19A) mounted for guiding the direct-transmitting gear to engage and disengage with the driving member and the driven member, and the other end thereof connected coaxially with the driven pulley (12),
(o) a friction member (22) installed pivotally between the guide member and the driven pulley,
(p) a maintaining means provided with an electromagnetic solenoid device (15) which maintains meshing of the driving member with the driven member of the direct-transmitting gear against torque force which will move the guide member via the friction member (22).

2. A device for exchanging tape-reel speed as set forth in Claim 1, wherein the maintaining means to maintain meshing of the direct-transmitting gear (14) comprises:
(a) a pivot (16A) attached vertically to a chassis,
(b) a bias spring (17) with one end and the other end thereof being attached to a lever (16) and the chassis, respectively,
(c) a ferrite piece (18) of the solenoid device (15) connected with the one end of the lever (16) which pivotally supports the direct-transmitting gear (14) by the other end.

3. A device for exchanging tape-reel speed as set forth in Claim 1 or Claim 2, wherein the guide member and the maintaining means are disposed and constructed so that:
(a) in case the electromagnetic solenoid is excited (rapid forwarding or rewinding condition), movement of the guide member (19) to separate the direct-transmitting gear (14) from the driving and driven members along the V-shaped guide (19A), caused by torque force of the driven pulley (as) via the friction member (22), is prevented by the maintaining means, and,
(b) in case the electromagnetic solenoid is disgaussed (playing or recording condition), the guide member 19 makes the direct-transmitting gear (14) separate from the driving and driven members along the V-shaped guide 19A by means of torque force of the driven pulley (12) via the friction member (12) against the maintaining means.

## Patentansprüche

1. Eine Vorrichtung zum Wechsel der Bandspulengeschwindigkeit zur Anwendung an ein Bandaufnahmegerät oder an einen Spieler, mit :
(a) einer Antriebsbandscheibe (1) zum Aufsetzen einer Bandspule auf derselben,
(b) einer Abtriebsbandscheibe (2) zum Aufsetzen einer Bandabwickelspule auf derselben, und
(c) Mitteln zur abwechselnden Abgabe einer Drehmomentkraft von einem Antriebsmotor an die eine und die andere Bandscheibe, wobei die besagten Abgabemittel :
(d) zwei jeweils an der Antriebs- und Abtriebsscheibe angebrachte Ritzel (4 und 5),
(e) ein Schaltritzel (6), das abwechselnd mit dem einen und dem anderen der beiden Ritzel kämmt,
(f) ein Schaltglied (7), das das Kämmen des Ritzels (6) abwechselnd mit dem einen und dem anderen der beiden Ritzel veranlässt,
(g) ein Drehmomentübertragungsritzel (8), das stets mit dem Schaltritzel (6) kämmt,
haben,
dadurch gekennzeichnet, dass sie umfasst :
(h) ein mit dem Drehmomentübertragungsritzel (8) koaxial verbundenes Abtriebsritzel (9),
(i) ein Antriebsritzel (10), das sich mit dem Abtriebsglied koaxial dreht,
(j) eine an dem Antriebsglied angeordnete Abtriebsrolle (12) zur Übertragung der Drehmomentkraft von dem Antriebsmotor,
(k) ein zwischen dem Antriebsglied und dem Abtriebsglied angeordnetes Reibungsglied (11),
(l) ein Mittel, um das Abtriebsglied zum Eingriff mit dem Antriebsglied über das Reibungsglied zu beaufschlagen,
(m) ein Direktübertragungsritzel (14), das mit dem Antriebsglied und dem Abtriebsglied in lösbarer Weise kämmt,
(n) ein Führungsglied (19), dessen eine Ende eine V-förmige Führung (19A) aufweist, die angeordnet ist, um das Direktübertragungsritzel zu führen, um es in und ausser Eingriff mit dem Antriebsglied und dem Abtriebsglied zu bringen und dessen andere Ende mit der Abtriebsrolle (12) koaxial verbunden ist,
(o) ein schwenkbar zwischen dem Führungsglied und der Abtriebsrolle angeordnetes Reibungsglied (22),
(p) ein Halteglied, das mit einer elektromagnetischen Solenoidvorrichgung (15) versehen ist, welche das Kämmen des Antriebsgliedes mit dem Abtriebsglied des Direktübertragungsritzels entgegen der Drehmomentkraft, die das Führungselement über das Reibungsglied (22) bewegen wird, aufrechthält.

2. Eine wie im Anspruch 1 dargelegte Vorrichtung zum Wechsel der Bandspulengeschwindigkeit, in welcher das Haltemittel, um das Kämmen des Direktübertragungsritzels (14) aufrechtzuhalten, umfasst :
(a) einen senkrecht an einem Rahmen befestigten Drehzapfen (16A),
(b) eine Rückstellfeder (17), deren eine und andere Ende jeweils an einem Hebel (16) und an dem Rahmen befestigt sind,
(c) ein Ferritstück (18) der Solenoidvorrichtung (15), das mit dem einen Ende des Hebels (16), der das Direktübertragungsritzel (14) mit dem anderen Ende schwenkbar trägt, befestigt ist.

3. Eine wie im Anspruch 1 oder im Anspruch 2 dargelegte Vorrichtung zum Wechsel der Bandspulengeschwindigkeit, in welcher das Führungsglied und das Haltemittel derart angeordnet und hergestellt sind, dass :
(a) in dem Fall, wenn das elektromagnetische Solenoid erregt wird (Zustand des Schnellvorlaufes oder- rücklaufes), die durch die Drehmomentkraft der Antriebsrolle (as) über das Reibungsglied (22) verursachte Bewegung des Führungsgliedes (19) um das Direktübertragungsritzel (14) von dem Antriebs- und Abtriebsglied entlang der V-förmigen Führung (19A) zu trennen, durch das Haltemittel verhindert wird, und
(b) in dem Fall, wenn das elektrische Solenoid entregt wird (Wiedergabe- oder Aufnahmezustand), das Führungsglied (19) die Trennung des Direktübertragungsritzels (14) von dem Antriebs- und Abtriebsglied entlang der V-förmigen Führung (19A) mittels der Drehmomentkraft der Abtriebsrolle (12) über das Reibungsglied (12) entgegen des Haltemittels veranlasst.

## Revendications

1. Un dispositif pour changer la vitesse d'une bobine de bande à appliquer à un enregistreur sur bande ou à un lecteur, comprenant :
(a) un disque menant pour bande (1) pour poser une bobine de bande sur celui-ci,
(b) un disque mené pour bande (2) pour poser une bobine débitrice de bande sur celui-ci, et
(c) des moyens pour fournir alternativement une force de couple depuis un moteur d'entraînement à l'un et à l'autre des disques pour bande,
lesdits moyens fournisseurs ayant :
(d) deux pignons (4 et 5) attachés respectivement aux disques menant et mené,
(d) un pignon de changement (6) qui engrène alternativement avec l'un et l'autre des deux pignons,
(f) un organe de changement (7) qui fait engrener le pignon (6) alternativement avec l'un et l'autre des deux pignons,
(g) un pignon transmetteur de couple (8) qui engrène toujours avec le pignon de changement (6),
caractérisé par le fait qu'il comprend :
(h) un pignon mené (9) relié coaxialement au pignon transmetteur de couple (8),
(i) un pignon menant (10) qui tourne coaxialement avec l'organe mené,
(j) une poulie menée (12) montée sur l'organe menant pour transmettre une force de couple depuis le moteur d'entraînement
(k) un organe de friction (11) disposé entre l'organe menant et l'organe mené,
(l) un moyen pour solliciter l'organe mené vers l'organe menant par l'intermédiaire de l'organe de friction,
(m) un pignon de transmission directe (14) qui engrène avec l'organe menant et l'organe mené de façon désacouplable,
(n) un élément de guidage (19) dont une extrémité a un guide (19A) en forme de V, monté pour guider le pignon de transmission directe pour entrer en prise avec l'organe menant et l'organe mené et pour s'en dégager et dont l'autre extrémité est reliée coaxialement à la poulie menée (12),
(o) un organe de friction (22) installé de façon pivotante entre l'élément de guidage et la poulie menée,
(p) un moyen de maintien pourvu d'un dispositif électromagnétique à solénoïde (15) qui maintient l'engrènement de l'organe menant avec l'organe mené du pignon de transmission directe à l'encontre de la force de couple qui déplacera l'élément de guidage par l'intermédiaire de l'organe de friction (22).

2. Un dispositif de changement de vitesse de bobine de bande tel qu'exposé dans la revendication 1, dans lequel le moyen de maintien, pour maintenir l'engrènement du pignon de transmission directe (14), comprend :
(a) un pivot (16A) attaché verticalement à un châssis,
(b) un ressort de rappel (17) dont l'une et l'autre extrémités sont attachées respectivement à un levier (16) et au châssis,
(c) une pièce en ferrite (18) du dispositif à solénoïde (15) reliée à une extrémité du levier (16) qui supporte, de façon pivotante, le pignon de transmission directe (14) par l'autre extrémité.

3. Un dispositif de changement de vitesse de bobine de bande tel qu'exposé dans la revendication 1 ou la revendication 2, dans lequel l'élément de guidage et le moyen de maintien sont disposés et construits de telle façon que :
(a) dans le cas où le solénoïde électromagnétique est excité (état d'avancement ou de rembobinage rapide), le mouvement de l'élément de guidage (19), pour séparer le pignon de transmission directe (14) des organes menant et mené le long du guide (19A) en forme de V, causé par la force de couple de la poulie menée (as) par l'intermédiaire de l'organe de friction (22), est empêché par le moyen de maintien, et
(b) dans le cas où le solénoïde électromagnétique est désexcité (état de lecture ou d'enregistrement), l'élément de guidage (19) fait que le pignon de transmission directe (14) soit séparé des organes menant et mené le long du guide (19A) en forme de V au moyen de la force de couple de la poulie menée (12) par l'intermédiaire de l'organe de friction (22) à l'encontre du moyen de maintien.
